# FASCICULE DE BREVET EUROPEEN

(11) **EP 3 314 147 B1**
(45) Date de publication et mention de la délivrance du brevet: **26.06.2019**
(21) Numéro de dépôt: 16741656.9
(22) Date de dépôt: 13.06.2016
(51) Int. Cl.: F16G 3/02, F16G 3/04

(54) **AGRAFES POUR DISPOSITIFS DE JONCTIONNEMENT DES EXTRÉMITÉS D'UNE BANDE TRANSPORTEUSE**
KLAMMERN FÜR VORRICHTUNGEN ZUM VERBINDEN DER ENDEN EINES FÖRDERBANDES
CLIPS FOR DEVICES FOR JOINING THE ENDS OF A CONVEYOR BELT

(30) Priorité: 25.06.2015 FR 1501342
(43) Date de publication de la demande: 02.05.2018
(73) Titulaire: MLT Minet Lacing Technology, 42400 Saint-Chamond (FR)
(72) Inventeur: JAKOB, Horst, 30360 Deaux (FR)
(74) Mandataire: Gaillarde, Frédéric F. Ch.
(86) Numéro de dépôt international: PCT/FR2016/051423
(87) Numéro de publication internationale: WO 2016/207512

(56) Documents cités:
- BE-A- 368 962
- FR-A1- 2 701 300

## Description

L'invention concerne des agrafes destinées à la réalisation de dispositifs de jonctionnement du genre charnière, pour bandes transporteuses.

Ces agrafes fixées en deux rangées à cheval sur des extrémités de bande transporteuse qu'il s'agit de relier, avec débordement de leur partie avant courbe, ou nez, sont connues de longue date. Ci-après sont définis différents termes utilisés par convention, pour la description de l'art antérieur et pour la description de la présente invention.

Avant signifie l'espace situé vers l'extérieur de la partie avant courbe, ou nez, des agrafes.

Arrière signifie l'espace situé dans la direction des branches d'agrafe servant à fixer celle-ci sur une extrémité de bande transporteuse.

Direction longitudinale signifie toute direction parallèle à la direction longitudinale de la bande transporteuse sur laquelle est montée l'agrafe.

Direction transversale signifie toute direction perpendiculaire à la direction longitudinale.

Le brevet français 2 701 300 illustre de telles agrafes de l'art antérieur. Dans le cas des agrafes selon ce brevet antérieur, deux particularités sont décrites. La première réside dans le fait qu'un anneau est fixé dans la partie concave de la partie avant courbe des agrafes. Une tige de liaison et d'articulation est insérée dans un anneau appartenant à une agrafe d'une rangée d'agrafes fixées sur une des extrémités de la bande transporteuse, puis dans un anneau appartenant à une agrafe de l'autre rangée d'agrafes fixées sur l'autre extrémité de la bande transporteuse, et ainsi de suite.

Ceci est illustré par la figure 5 de ce document de l'art antérieur. La deuxième particularité de ce brevet réside dans le fait qu'une lame d'étanchéité peut être fixée à l'arrière des anneaux (voir les figures 16, 17 du document de l'art antérieur cité plus haut).

Un des problèmes posés par ce genre d'agrafes, abordé dans le document de l'art antérieur, consistait en ce que pour que les anneaux soient alignés parallèlement au bord transversal de l'extrémité de bande transporteuse, à une distance du chant des extrémités de bande transporteuse égale pour toutes les agrafes afin de permettre l'enfilage aisé de la tige de liaison et d'articulation, il fallait qu'un calage correct des agrafes soit assuré lors de la pose des agrafes.

Dans les agrafes selon ce document ce calage était obtenu par le fait que l'anneau venait en appui par se partie arrière contre le chant de l'extrémité de bande transporteuse considérée, soit directement, soit indirectement par l'intermédiaire d'une lamelle d'étanchéité fixée sur l'arrière des anneaux.

Il s'est avéré que cet appui sur l'arrière des annaux ne mettait pas les anneaux à l'abri de déformations du fait que les bandes transporteuses subissent lors de leur fonctionnement des forces de traction et des forces de compression dans la direction longitudinale. Les à-coups imprimés à la bande transporteuse se répercutaient également sur l'arrière des anneaux.

Ces déformations des anneaux étaient défavorables car elles entraînaient une usure anormale des tiges de liaison et d'articulation. De plus les agrafes fixées aux extrémités de bande transporteuse subissaient de ce fait des tractions ou des poussées qui se transmettaient aux moyens de fixation à tige utilisés pour la fixation des agrafes et par là aux armatures des extrémités de bande transporteuse dans lesquelles passaient des moyens de fixation à tige.

Il s'ensuivait des arrachements d'agrafes obligeant à des réparations et de ce fait à des arrêts de bandes transporteuses, préjudiciables au rendement des installations et coûteuses en main d'oeuvre.

Un autre inconvénient des agrafes connues consistait en ce que les extrémités des branches de fixation des agrafes étant alignées dans la direction transversale (c'est-à-dire la direction perpendiculaire à la direction longitudinale définie plus haut) ces extrémités des branches de fixation des agrafes provoquaient des morsures alignées très proches les unes des autres. Ces morsures arrivaient à se rejoindre et à provoquer l'apparition de lignes de faiblesse. Ces lignes de faiblesse occasionnaient des détériorations graves dans les extrémités de bande transporteuse. Ces détériorations graves pouvaient à leur tour aller jusqu'à provoquer des pannes et des arrêts des bandes transporteuses.

La présente invention a pour but de remédier radicalement aux déformations des anneaux lors du fonctionnement des bandes transporteuses et par là à éviter les détériorations graves entraînées par les morsures alignées transversalement provoquées par les extrémités des branches de fixation des agrafes, ainsi que par les alignements dans le sens transversal des perforations des extrémités de bande transporteuse sur lesquelles sont fixées les agrafes.

Pour éviter des déformations des anneaux, ou tubes, la présente invention propose que le tube de l'agrafe soit muni d'un étrier comportant deux joues et une partie de liaison reliant les deux joues, chacune des deux joues étant fixée par sa partie avant à une des extrémités latérales respective du tube, la dimension des joues étant telle que leurs parties avant fixées au tube peuvent trouver place, avec le tube, dans la partie concave avant de l'agrafe, leurs parties arrière et la partie de liaison étant dimensionnées de façon telle que les chants des parties arrière des joues, ainsi que la partie de liaison soient situés au moins approximativement dans un même plan à l'écart de la partie arrière de la périphérie du tube, ces chants des parties arrière des joues et la partie de liaison étant aptes, lors de la mise en place et de la fixation de l'agrafe, à s'appliquer contre le chant de l'extrémité de bande transporteuse concernée.

La fixation des joues de l'étrier sur le tube peut être réalisée au moyen de perçages pratiqués dans la partie avant de chacune des joues de l'étrier, chacun de ces perçages étant enfilé avec bridage sur une des extrémités latérales du tube, le diamètre des perçages pouvant, dans ce but, être très légèrement inférieur au diamètre extérieur du tube. Cette fixation peut être confortée par une soudure et les bords du tube sur lequel sont enfilées les joues de l'étrier peuvent être rabattus ou rivetés contre la face extérieure de chacune des joues de l'étrier.

Ainsi les tubes ne sont pas soumis à des forces s'exerçant essentiellement sur l'arrière des tubes mais au contraire, du fait que les étriers enserrent toute la périphérie circulaire des deux extrémités latérales des tubes, ceux-ci ne peuvent pas s'ovaliser ni subir une autre déformation localisée.

L'attelage que constitue l'extrémité de la bande transporteuse, l'étrier, le tube, la partie avant courbe de l'agrafe et la tige de liaison et d'articulation peut ainsi fonctionner de façon mécanique, et ce, durablement.

Pour remédier aux morsures alignées dans la direction transversale, la présente invention propose d'utiliser des branches d'agrafe de longueur différente dans les agrafes successives.

Des couples d'agrafes dont les branches sont de longueur différente peuvent être réalisés en associant deux agrafes par des ponts de la matière des agrafes qui le relient dans la direction transversale. On peut aussi relier plusieurs de tels couples de deux agrafes dont les branches sont de longueur inégale pour former des ensembles d'un nombre pair d'agrafes en vue de faciliter leur manipulation lors de la pose et de la fixation sur l'extrémité de bande transporteuse concernée.

L'invention sera mieux comprise grâce au dessin qui suit et qui représente des formes de réalisation préférées de l'invention.

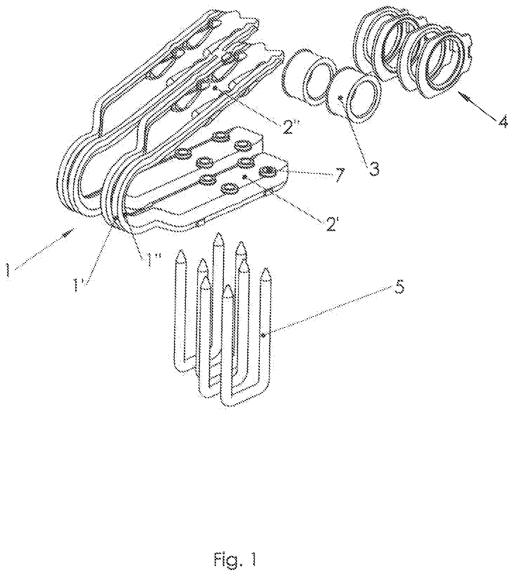

La figure 1 représente en éclaté une agrafe selon l'invention décomposée en ses différents éléments.

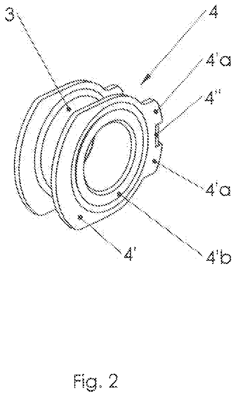

La figure 2 représente en perspective, vu de trois-quarts avant, le sous-ensemble étrier-tube de la figure 1.

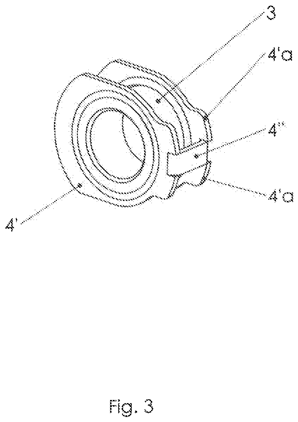

La figure 3 représente en perspective, vu de trois-quarts arrière, le sous-ensemble étrier-tube de la figure 1.

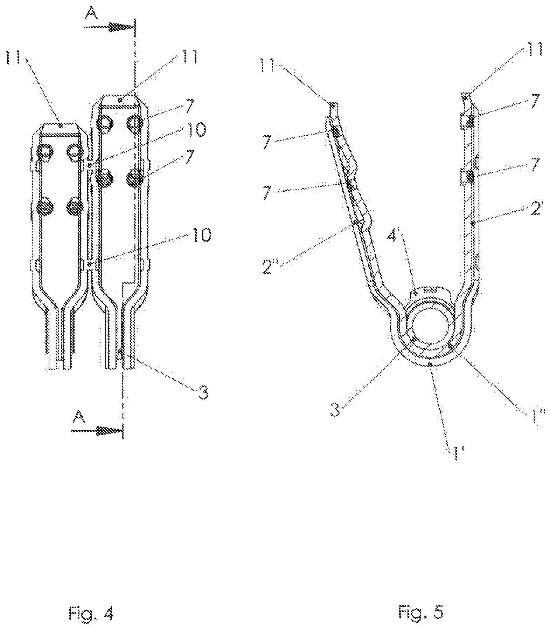

La figure 4 représente vu en plan un ensemble de deux agrafes reliées entre elles par des ponts réalisés dans leur propre matière.
La figure 5 représente une agrafe selon la figure 4, en coupe selon la ligne A-A de la figure 4.

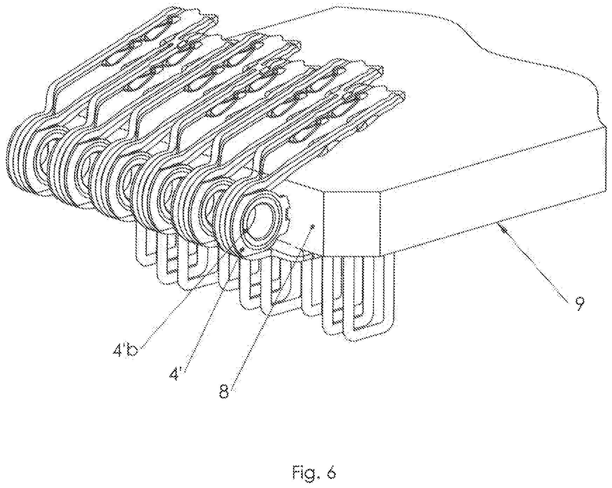

La figure 6 représente en perspective un ensemble de 6 agrafes selon la figure 4 prêtes à être refermées et fixées sur une extrémité de bande transporteuse.

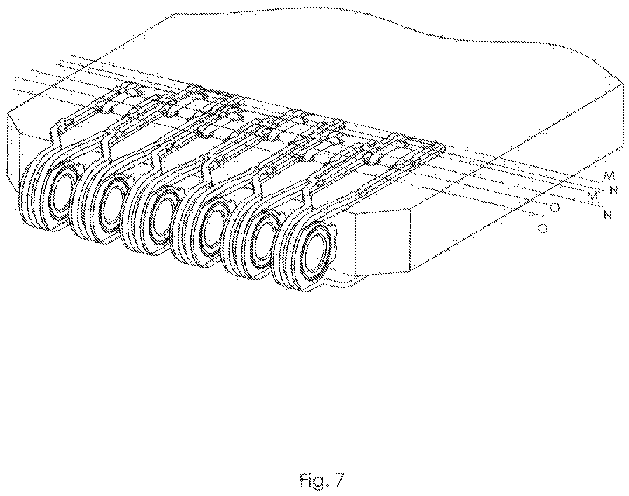

La figure 7 représente le même ensemble de 6 agrafes que celui de la figure 6 vu depuis l'autre côté.

La figure 1 montre deux agrafes 1 en forme de U ouvert, chacune des branches 2', 2" comportant des trous 7 destinés au passage de moyens de fixation à tige 5, ici des crampons représentés sous les agrafes. Des tubes 3 et des étriers 4 sont destinés à être assemblés et montés dans la partie concave avant 1" des agrafes 1 comme expliqué dans les figures qui suivent.

La figure 2 représente en perspective un étrier 4 qui comporte deux joues 4' et une partie de liaison 4" qui relie les deux joues 4' par les parties verticales arrière 4'a de celles-ci, chacune des deux joues 4', 4' de l'étrier comportant un perçage 4'b dans lequel est emmanché avec bridage un tube 3. Les bords du tube 3 recevant ainsi les joues 4', 4' peuvent être rabattus, ou rivetés, contre la face extérieure des joues de l'étrier.

La figure 3 représente en perspective le même étrier 4 que la figure 2 et le tube 3 vus cette fois de trois-quarts arrière. On reconnaît les mêmes parties que dans la figure 2, portant les mêmes références.

La figure 4 représente vues en plan depuis le bas deux agrafes 1 selon l'invention reliées entre elles par des ponts 10 réalisés dans leur propre matière. En effet les agrafes sont souvent fournies sous forme d'ensembles d'agrafes juxtaposées et reliées entre elles en vue de faciliter leur positionnement et leur pose lors de la confection des dispositifs de jonction. On reconnaît les parties déjà décrites en relation avec les figures précédentes, portant les mêmes références, (branches 2', 2" d'agrafe, tube 3, étrier 4, trous 7 de passage de moyens de fixation à tige). On remarque les talons 11 des branches 2', 2" d'agrafe.

On remarquera également que les deux agrafes juxtaposées ont des branches 2' et 2" de longueur différente. Cette particularité a une utilité qui sera expliquée plus loin en liaison avec la figure 7.

La figure 5 qui représente en coupe une agrafe selon l'invention permet d'identifier les parties déjà décrites en relation avec les figures précédentes (tube 3 en coupe, étrier 4, branches 2', 2" de l'agrafe, trous 7 de passage pour les tiges des moyens de fixation à tige).

La figure 6 qui montre un ensemble de six agrafes prêt à être fixé permet de bien comprendre comment les parties verticales arrière des joues 4', 4' de l'étrier 4 et la partie de liaison 4" de l'étrier 4 de chaque agrafe viennent en contact et en appui contre le chant 8 de l'extrémité 9 de la bande transporteuse.

Une géométrie très précise se trouve ainsi établie au niveau de chacune des agrafes entre le chant 8 de l'extrémité 9 de la bande transporteuse et par l'intermédiaire du sous-ensemble étrier-tube, la partie concave avant 1" de l'agrafe dans laquelle est logé le tube porteur de l'étrier 4.

Cette précision géométrique n'était pas obtenue par les moyens connus jusqu'à présent.

Grâce à l'emploi d'un étrier dont la partie arrière se situe à l'écart de la périphérie du tube, les forces induites, lors du fonctionnement de la bande transporteuse, par le chant de l'extrémité de la bande transporteuse ne s'exercent pas, comme dans l'art antérieur, directement sur la partie arrière de la périphérie du tube, en y provoquant une altération de la forme circulaire, mais sur toute la périphérie du tube ceinturé dans les perçages 4'b des joues 4', 4' de l'étrier, ce qui exclut une déformation de la forme circulaire du tube. Cette particularité explique que les nouvelles agrafes et la tige de liaison et d'articulation subissent une usure beaucoup moins importante, l'articulation fonctionnant toujours dans des conditions mécaniques optimales.

Ce fonctionnement de haute qualité mécanique autorise des longévités sans qu'il se produise des arrachements ni des pannes des jonctions, très supérieures à celles que permettaient les agrafes connues jusqu'à présent.

La figure 7 montre le même ensemble d'agrafes selon l'invention que la figure 6 vues depuis l'autre côté, les agrafes étant fixées. Les mêmes commentaires que pour la figure 6 peuvent être faits en ce qui concerne la précision du montage. De plus cette vue permet de bien comprendre l'intérêt d'avoir les agrafes juxtaposées, reliées ou non entre elles, ayant des longueurs de branches différentes. Dans l'exemple représenté on a tracé les lignes d'alignement transversal des passages destinés aux tiges des crampons. Les trous pratiqués dans l'extrémité de la bande transporteuse sont alignés sur 4 lignes N, N', O, O' mais sont écartés dans le sens transversal deux fois plus qu'ils ne le seraient dans le cas de branches de longueur égale fixées de la même manière avec des crampons à deux branches. Bien entendu des variantes peuvent être envisagées avec d'autres moyens de fixation à tige à une seule tige. Mais dans tous les cas, des branches de longueur inégale permettent de diminuer fortement la proximité dans le sens transversal des trous pratiqués dans l'extrémité de la bande transporteuse, et de ce fait dans son armature textile.

On remarque également sur la figure 7 que les talons 11 des branches d'agrafes de longueur inégale sont situés sur deux lignes d'alignement transversal M, M'. Du fait de la longueur inégale des branches d'agrafes juxtaposées, les morsures que ces talons 11 de branches d'agrafe provoquent dans la matière de la face supérieure (et de la face inférieure de l'extrémité de bande transporteuse) se trouvent ainsi deux fois plus écartées les unes des autres qu'elles ne le seraient si les agrafes avait des branches de longueur égale, le risque qu'elles se rejoignent lors du fonctionnement de la bande est donc fortement diminué. Ceci contribue également à améliorer grandement la longévité du fonctionnement sans détériorations des jonctions ainsi obtenues, ni panne.

A noter que si on renonce à utiliser des agrafes juxtaposées dont les branches sont de longueur inégale, il est possible d'utiliser des agrafes juxtaposées dont les branches sont de longueur égale mais dont les trous 7 de passage des moyens de fixation à tige d'une agrafe sur deux agrafes juxtaposées sont décalés dans la direction longitudinale par rapport aux trous de passage des moyens de fixation à tige de l'agrafe contiguë ou des agrafes contiguës.

Ainsi sont atteints les deux buts recherchés en vue d'améliorer les agrafes connues, c'est-à-dire une très grande précision dimensionnelle des appuis et des liaisons autorisant un fonctionnement mécanique de grande qualité de l'articulation ainsi que l'absence de détériorations graves provenant des morsures des talons des branches des agrafes trop proches les unes des autres. L'écartement des tiges des moyens de fixation à tige également obtenu concourt aussi à ces résultats.

## Revendications

1. Agrafe (1) destinée à la réalisation de dispositifs de jonctionnement du genre charnière pour les bandes transporteuses, constituée d'une pièce en forme générale de U, découpée dans un feuillard métallique ou dans un autre matériau plat et courbée en forme de U, les agrafes de ces dispositifs de jonctionnement étant placées et fixées à cheval sur les extrémités de bande transporteuse, avec débordement de leur partie courbe par rapport au chant de l'extrémité de bande transporteuse, les rangées d'agrafes disposées côte à côte sur les extrémités respectives de bande transporteuse étant imbriquées l'une dans l'autre, le nez de chaque agrafe d'une des rangées étant dimensionné de manière à trouver place entre deux nez voisins d'agrafes de la rangée antagoniste, une tige de liaison et d'articulation étant passée dans les yeux ainsi formés, lesdites agrafes étant munies d'un anneau, ou tube, de section circulaire logé dans la partie concave courbe du nez de chaque agrafe, lesdits anneaux, ou tubes, servant au passage de la tige de liaison et d'articulation,
**caractérisée en ce que**
le tube (3) de l'agrafe (1) est muni d'un étrier (4) comportant deux joues et une partie de liaison (4") reliant les deux joues (4'), chacune des deux joues (4') étant fixée par sa partie avant à une extrémité latérale respective du tube, la dimension des joues (4') étant telle que leurs parties avant fixées au tube (3) peuvent trouver place, avec le tube (3), dans la partie concave avant (1") de l'agrafe, leurs parties arrière (4'a), et la partie de liaison (4") étant dimensionnées de façon telle que les chants des parties arrière (4'a) des joues et la partie de liaison (4") se situent dans un plan situé à l'écart de la partie arrière de la périphérie du tube, ces chants des parties arrière (4'a) des joues et la partie de liaison (4") étant ainsi aptes à venir s'appliquer contre le chant (8) de l'extrémité (9) de bande transporteuse concernée.

2. Agrafe selon la revendication 1
**caractérisée en ce que**
la fixation des joues (4') de l'étrier (4) sur le tube (3) est réalisée au moyen d'un perçage (4'b) pratiqué dans la partie avant de chacune des joues (4') de l'étrier (4), chacun de ces perçages (4'b) étant enfilé avec bridage sur une des extrémités latérales du tube (3), le diamètre des perçages (4'b) pouvant être, dans ce but, très légèrement inférieur au diamètre extérieur du tube.

3. Agrafe selon la revendication 2
**caractérisée en ce que**
la fixation des joues (4') de l'étrier (4) est confortée par une soudure.

4. Agrafe selon la revendication 2 ou 3
**caractérisée en ce que**
les bords du tube sur lequel sont enfilées les joues (4') de l'étrier (4) sont rabattus, ou rivetés contre la face extérieure de chacune des joues (4') de l'étrier (4).

5. Agrafes selon l'une des revendications 2 à 4
**caractérisées en ce qu'**
elles sont reliées latéralement par des ponts (10) réalisés dans leur propre matière de manière à être juxtaposées côte à côte en constituant des ensembles d'agrafes dont les parties avant courbes (1') sont alignées dans la direction transversale.

6. Agrafes selon la revendication 5
**caractérisées en ce qu'**
elles constituent des ensembles d'agrafes comportant au moins deux agrafes.

7. Agrafes selon la revendication 6
**caractérisées en ce que**
dans les ensembles d'agrafes juxtaposées dont les parties courbes sont alignées dans la direction transversale, une agrafe sur deux agrafes juxtaposées a des branches plus courtes que celles de l'agrafe contiguë, ou des agrafes contiguës.

8. Agrafes selon la revendication 5 ou 6
**caractérisées en ce que**
dans les ensembles d'agrafes juxtaposées dont les parties avant sont alignées dans le sens transversal, les trous de passage (7) de moyens de fixation à tige d'une agrafe sur deux agrafes juxtaposées sont décalés dans la direction longitudinale par rapport aux trous de passage de moyens de fixation à tige de l'agrafe contiguë, ou des agrafes contiguës.

## Patentansprüche

1. Klammer (1), die für die Ausführung von Verbindungsvorrichtungen von der Art eines Scharniergelenks für die Förderbänder bestimmt ist, bestehend aus einem Teil in allgemeiner U-Form, ausgeschnitten in einem Metallband oder in einem anderen flachen Material und in U-Form gekrümmt, wobei die Klammern dieser Verbindungsvorrichtungen übergreifend auf den Förderbandenden platziert und befestigt werden, mit einem Überstand ihres gekrümmten Abschnitts in Bezug auf die Kante des Förderbandendes, wobei die an den jeweiligen Förderbandenden Seite an Seite angeordneten Klammerreihen ineinander verschachtelt sind, wobei die Nase jeder Klammer einer der Reihen so dimensioniert ist, dass sie zwischen zwei benachbarten Nasen von Klammern der Gegenreihe Platz findet, wobei ein Verbindungs- und Gelenkstift in die so gebildeten Augen eingefügt wird, wobei die Klammern mit einem Ring oder Rohr mit kreisförmigem Querschnitt ausgestattet sind, der oder das in dem gekrümmten, konkaven Abschnitt der Nase jeder Klammer untergebracht ist, wobei die Ringe oder Rohre für den Durchgang des Verbindungs- und Gelenkstifts dienen,
**dadurch gekennzeichnet, dass**
das Rohr (3) der Klammer (1) mit einer Schelle (4) ausgestattet ist, die zwei Wangen und einen Verbindungsabschnitt (4") umfasst, der die zwei Wangen (4') verbindet, wobei jede der zwei Wangen (4') an ihrem Vorderabschnitt an einem jeweiligen seitlichen Ende des Rohres befestigt ist, wobei die Abmessung der Wangen (4') so ist, dass ihre Vorderabschnitte, die an dem Rohr (3) befestigt sind, mit dem Rohr (3) in dem konkaven Vorderabschnitt (1") der Klammer Platz finden können, wobei ihre Hinterabschnitte (4'a) und der Verbindungsabschnitt (4") so dimensioniert sind, dass sich die Kanten der Hinterabschnitte (4'a) der Wangen und der Verbindungsabschnitt (4") in einer Ebene befinden, die sich beabstandet von dem Hinterabschnitt der Peripherie des Rohres befindet, wobei diese Kanten der Hinterabschnitte (4'a) der Wangen und der Verbindungsabschnitt (4") somit imstande sind, gegen die Kante (8) des betroffenen Förderbandendes (9) zu drücken.

2. Klammer nach Anspruch 1,
**dadurch gekennzeichnet, dass**
die Befestigung der Wangen (4') der Schelle (4) auf dem Rohr (3) mittels einer Bohrung (4'b) ausgeführt wird, die in dem Vorderabschnitt jeder der Wangen (4') der Schelle (4) angebracht ist, wobei jede dieser Bohrungen (4'b) mit Anflanschung auf einem der seitlichen Enden des Rohres (3) aufgereiht ist, wobei der Durchmesser der Bohrungen (4'b) zu diesem Zweck ganz leicht kleiner sein kann als der Außendurchmesser des Rohres.

3. Klammer nach Anspruch 2,
**dadurch gekennzeichnet, dass**
die Befestigung der Wangen (4') der Schelle (4) durch eine Schweißung gefestigt wird.

4. Klammer nach Anspruch 2 oder 3,
**dadurch gekennzeichnet, dass**
die Ränder des Rohres, auf dem die Wangen (4') der Schelle (4) aufgereiht sind, umgeschlagen sind oder gegen die Außenfläche jeder der Wangen (4') der Schelle (4) vernietet sind.

5. Klammern nach einem der Ansprüche 2 bis 4,
**dadurch gekennzeichnet, dass**
sie seitlich durch Stege (10) verbunden sind, die in ihrem eigenen Material ausgeführt sind, so dass sie Seite an Seite nebeneinandergereiht sind, indem sie Klammereinheiten bilden, deren gekrümmte Vorderabschnitte (1') in quer verlaufender Richtung in einer Linie ausgerichtet sind.

6. Klammern nach Anspruch 5,
**dadurch gekennzeichnet, dass**
sie Klammereinheiten bilden, die mindestens zwei Klammern umfassen.

7. Klammern nach Anspruch 6,
**dadurch gekennzeichnet, dass**
in den nebeneinandergereihten Klammereinheiten, deren gekrümmte Abschnitte in quer verlaufender Richtung in einer Linie ausgerichtet sind, eine Klammer von zwei nebeneinandergereihten Klammern kürzere Schenkel aufweist als die der angrenzenden Klammer oder der angrenzenden Klammern.

8. Klammern nach Anspruch 5 oder 6,
**dadurch gekennzeichnet, dass**
in den nebeneinandergereihten Klammereinheiten, deren Vorderabschnitte in quer verlaufender Richtung in einer Linie ausgerichtet sind, die Durchgangslöcher (7) von Stiftbefestigungsmitteln einer Klammer von zwei nebeneinandergereihten Klammern in Längsrichtung in Bezug auf die Durchgangslöcher von Stiftbefestigungsmitteln der angrenzenden Klammer oder der angrenzenden Klammern versetzt sind.

## Claims

1. A staple (1) intended to produce hinge-type splicing devices for conveyor belts, constituted by a part with a U-like general shape cut from a metal strip or from another U-shaped, flat, curved material , the staples of these splicing devices being placed and fastened astride on the conveyor belt ends, with overflow of their curved portion with respect to the rim of the conveyor belt end, the rows of staples arranged side by side on the respective conveyor belt ends being nested within each other, the nose of each staple of one of the rows being dimensioned so as to fit between two adjacent staple noses of the opposite row, a linking and hinge rod being passed in the apertures thus formed, said staples being provided with a ring, or tube, with a circular section housed within the curved concave portion of the nose of each staple, said rings, or tubes, serving for the passage of the linking and hinge rod,
**characterized in that**
the tube (3) of the staple (1) is provided with a bracket (4) including two cheeks and a linking portion (4") connecting the two cheeks (4'), each of the two cheeks (4') being fastened by its front portion to a respective lateral end of the tube, the dimension of the cheeks (4') being such that their front portions fastened to the tube (3) could fit, together with the tube (3), in the front concave portion (1") of the staple, their rear portions (4'a), and the linking portion (4") being dimensioned so that the rims of the rear portions (4'a) of the cheeks and the linking portion (4") are located in a plane located away from the rear portion of the periphery of the tube, these rims of the rear portions (4'a) of the cheeks and the linking portion (4") thus being adapted to be applied against the rim (8) of the concerned conveyor belt end (9).

2. The staple according to claim 1, **characterized in that** fastening of the cheeks (4') of the bracket (4) on the tube (3) is achieved by means of a bore (4'b) formed in the front portion of each of the cheeks (4') of the bracket (4), each of these bores (4'b) being fitted with clamping on one of the lateral ends of the tube (3), the diameter of the bores (4'b) may be, for this purpose, slightly smaller than the outer diameter of the tube.

3. The staple according to claim 2, **characterized in that** fastening of the cheeks (4') of the bracket (4) is reinforced by a weld.

4. The staple according to claim 2 or 3, **characterized in that** the edges of the tube on which are fitted the cheeks (4') of the bracket (4) are folded down, or riveted against the external face of each of the cheeks (4') of the bracket (4).

5. The staples according to any of claims 2 to 4, **characterized in that** they are laterally connected by bridges (10) made in their own material so as to be juxtaposed side by side constituting sets of staples whose curved front portions (1') are aligned in the transverse direction.

6. The staples according to claim 5, **characterized in that** they constitute sets of staples including at least two staples.

7. The staples according to claim 6, **characterized in that** in the sets of juxtaposed staples whose curved portions are aligned in the transverse direction, one staple out of two juxtaposed staples have branches shorter than those of the contiguous staple, or contiguous staples.

8. The staples according to claim 5 or 6, **characterized in that** in the sets of juxtaposed staples whose front portions are aligned in the transverse direction, the passage holes (7) of the rod fastening means of one staple out of two juxtaposed staples are shifted in the longitudinal direction with respect to the passage holes of the rod fastening means of the contiguous staple, or of the contiguous staples.
